# EUROPEAN PATENT APPLICATION

(11) **EP 0 896 485 A2**
(43) Date of publication of application: **10.02.1999**
(21) Application number: 98114920.6
(22) Date of filing: 07.08.1998
(51) Int. Cl.: H04Q 7/22

(54) **Method for manipulating short messages and corresponding mobile communication terminal and short message service center**

(30) Priority: 07.08.1997 KR 3770997; 22.07.1998 KR
(71) Applicant: Samsung Electronics Co., Ltd., Suwon-city, Kyungki-do (KR)
(72) Inventor: Cho, Hyung-Soo, Yongin-shi, Kyonggi-do (KR)
(74) Representative: Grünecker, Kinkeldey, Stockmair & Schwanhäusser Anwaltssozietät

(57) **Abstract**

The invention relates to a method for manipulating short messages by a mobile communication terminal in a GSM system. The mobile communication terminal transmits a short message to a short message service center to request a manipulation operation. The short message service center receives the request and performs the requested operation. The mobile communication terminal is connected to the short message service center to manipulate the stored short message.

## Description

The invention relates to a method for manipulating short messages in the GSM (Global System for Mobile Communication) system and to a corresponding mobile communication terminal and a short message service center.

The GSM system provides a short message service by point-to-point links. Short messages transmitted by point-to-point links are managed in a short message service center (SM-SC).

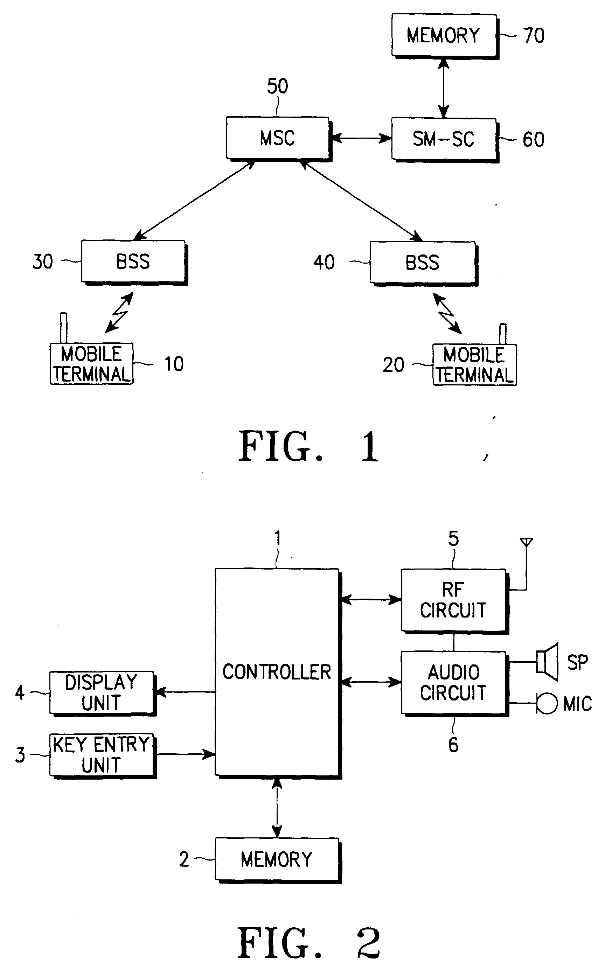

The conventional method for managing short messages in the GSM system will be described in the following with reference to figures 1 to 5.

FIG. 1 illustrates a general GSM system for transmitting short messages. Referring to FIG. 1, mobile communication terminals 10 and 20, which are GSM terminals, can transmit/receive both voice and data. A mobile switching center (MSC) 50 interfaces a call between a mobile communication network and another network. The MSC 50 is connected to a plurality of base station subsystems (BSSs) 30 and 40. Each of the BSSs 30 and 40 is comprised of a radio base station controller (not shown) and a plurality of radio base stations (not shown). Each of the BSSs 30 and 40 is connected to a plurality of mobile communication terminals through radio links. A short message service center (SM-SC) 60 is connected by a short message gateway (not shown) to the MSC 50 and provides a short character message service or a voice mailing service demanded from the mobile communication terminals 10 and 20. The SM-SC 60 has a memory 70 for storing short messages. The memory 70 includes an area for storing short messages and information about short message service subscribers and includes a short message confirmation flag indicating whether a called party has confirmed the stored short message. If the called party has confirmed the short message, the short message confirmation flag is designated as "1", and if not, it is designated as "0".

FIG. 2 is a block diagram of the mobile communication terminal 10 or 20 shown in FIG. 1. In the drawing, a controller 1 controls the overall operations of the mobile communication terminal. A memory 2 has a read only memory (ROM) for storing operation programs, a random access memory (RAM) for temporarily storing data generated during the execution of the operation programs, and an electrically erasable programmable read only memory (EEPROM). A key entry unit 3 has a plurality of numeral keys and function keys and supplies key data to the controller 1. A display unit 4 displays display data for the key data generated from the key entry unit 3 by the control of the controller 1, and displays the operating status of the mobile communication terminal and information by icons and characters. An audio circuit 6 converts an audio signal received through a microphone MIC or data received through the controller 1 into an intermediate frequency signal and restores an input intermediate frequency signal into an original signal. If the original signal is data, the audio circuit 6 supplies processed data to the controller 1, and if it is an audio signal, the audio circuit 6 generates a processed audio signal through a speaker SP. A radio frequency (RF) circuit 5 demodulates an RF signal received through an antenna into an intermediate frequency signal and supplies the intermediate frequency signal to the audio circuit 6. Further, the RF circuit 5 modulates the intermediate frequency signal received from the audio circuit 6 into the RF signal and transmits the RF signal through the antenna.

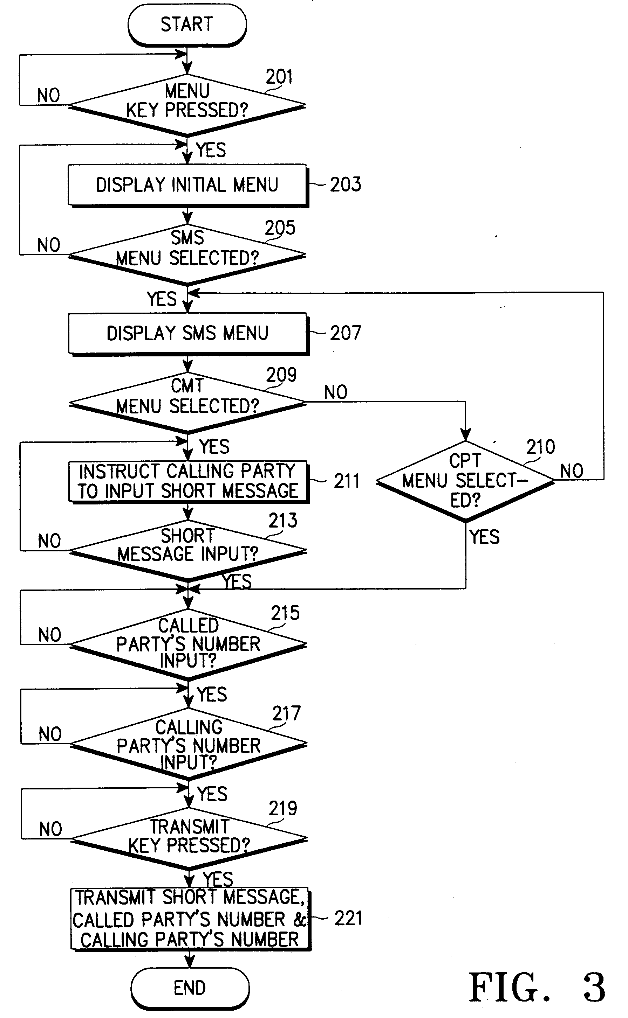

FIG. 3 is a flow chart showing a conventional short message registering procedure by the mobile communication terminal in the GSM system. The controller 1 of the mobile communication terminal checks if a menu key on the key entry unit 3 is pressed at step 201. Upon sensing the menu key being pressed, the controller 1 proceeds to step 203 to cause the display unit 4 to display an initial menu having items to branch to further menus, such as an incoming tone select menu and a short message service (SMS) menu. The controller 1 then determines if the SMS menu is selected at step 205. If a calling party selects the SMS menu, the controller 1 proceeds to step 207 to cause the display unit 4 to display the SMS menu. The controller 1 then checks if either a cellular message teleservice (CMT) menu or a cellular paging teleservice (CPT) menu is selected at steps 209 and 210. The CMT is for providing message and paging services, and the CPT is for providing only the paging service. Both the CMT and CPT are provided by the SM-SC 60. If the CMT menu is selected, the controller 1 causes the display unit 4 to instruct the calling party to input a short message at step 211. The controller 1 then checks if the short message is input at step 213. If the short message is input, the controller 1 causes the display unit 4 to display the short message and advances to step 215. Meanwhile, if the CPT menu is selected at step 210, the controller 1 proceeds to step 215. At step 215, the calling party is instructed to input a called party's number and a check is made to see if the called party's number is input. If that number is input, the controller 1 proceeds to step 217 where the calling party is instructed to input a calling party's number and a determination is made to see if the calling party's number is input. If the calling party's number is input, the controller 1 checks if a transmit key on the key entry unit 3 is pressed. If it is selected, the controller 1 transmits the short message, calling party's number and called party's number of a prescribed format through the antenna via the audio circuit 6 and the RF circuit 5.

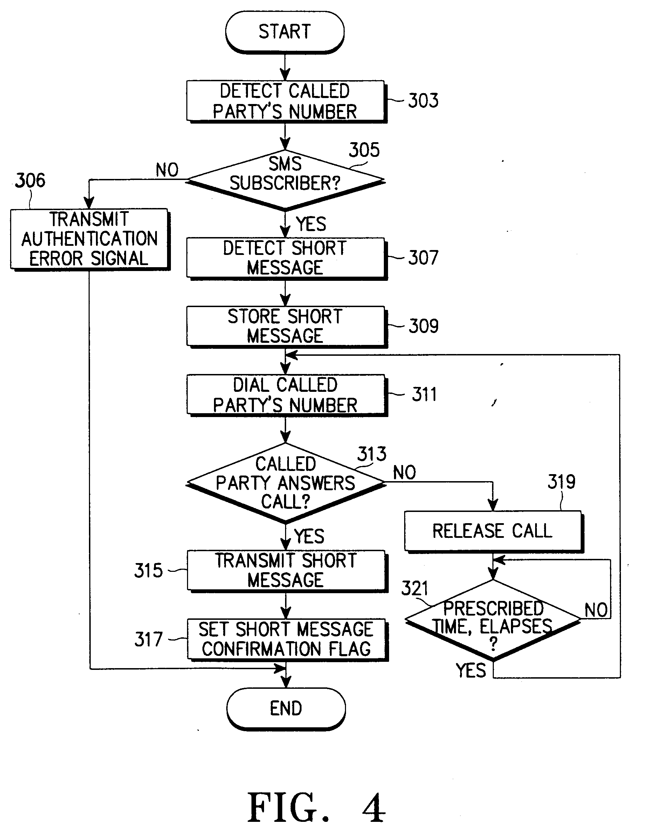

Assuming that the mobile communication terminal 10 transmits a short message to the mobile communication terminal 20, the short message transmitted from the mobile communication terminal 10 is transmitted to the SM-SC 60 through the BSS 30 and the MSC 50. Upon reception of the short message, the SM-SC 60 processes the short message by a short message processing procedure illustrated in FIG. 4.

Referring to FIG. 4, the SM-SC 60 detects the called party's number from a prescribed format including the calling party's number, the called party's number and the short message at step 303. The SM-SC 60 checks if the detected called party's number is a SMS subscriber. If yes, the SM-SC 60 proceeds to step 307 to detect the short message and then to step 309 to causes the memory 2 to store the detected short message in its subscriber area. If the detected called party's number is not a SMS subscriber, the SM-SC 60 proceeds to step 306 to transmit an authentication error signal to the mobile communication terminal 10.

If the short message is stored, the SM-SC 60 dials the called party's number at step 311, and then checks if the called party answers the call. If the call is formed, the SM-SC 60 transmits the short message to the mobile communication terminals 20 of the called party through the MSC 50 and the BSS 40. The SM-SC 60 then sets the short message confirmation flag at step 317.

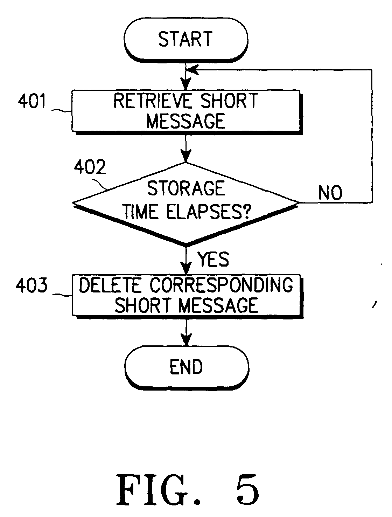

If the called party, that is, the mobile communication terminal 20 does not answer at step 313, the SM-SC 60 maintains the short message confirmation flag at a reset state ("0") and releases the call at step 319. The SM-SC 60 then checks if a prescribed time elapses after the call is released at step 321. The prescribed time designates a time interval for repeatedly informing the called party that the short message has been received. If the prescribed time elapses, the SM-SC 60 proceeds back to step 311 to attempt to transmit the short message. The short message stored in the memory 70 of the SM-SC 60 is deleted by a short message deleting procedure shown in FIG. 5.

Referring to FIG. 5, the SM-SC 60 periodically retrieves the short message stored in the memory 70 at step 401. By means of a short message storage time which is stored in the memory 70, the SM-SC 60 checks if there are short messages of which the storage time has elapsed at step 402. A short message of which the storage time has elapsed is deleted at step 403.

By means of the short message confirmation flag the mobile communication terminal 10 of a calling party can in an improved GSM system, be advised whether the short message is confirmed by the mobile communication terminal 20 of a called party.

However, in case a transmitted short message is no longer up-to-date or has been transmitted by mistake, or a wrong message has been input and transmitted, the calling party can in no way modify that message any more.

It is therefore the object of the invention to provide a method, a mobile communication terminal and a short message service center which allow the user to correct or delete a short message which has already been transmitted.

This object is solved by the subject matters of independent claim 1, 11 and 19.

Preferred embodiments are defined by the subject matters of the dependent claims.

The invention will become more apparent from the following detailed description when taken in conjunction with the accompanying drawings in which:
FIG. 1 is a block diagram of a general conventional GSM system;
FIG. 2 is a block diagram of a mobile communication terminal shown in FIG. 1;
FIG. 3 is a flow chart showing a conventional short message registering procedure by a mobile communication terminal in a GSM system;
FIG. 4 is a flow chart showing a conventional short message processing procedure by a SM-SC in a GSM system;
FIG. 5 is a flow chart showing a conventional short message deleting procedure by a SM-SC in a GSM system;
FIG. 6 is a flow chart showing a short message registering procedure by a mobile communication terminal in a GSM system according to the invention;
FIG. 7 is a flow chart showing a short message managing procedure by a mobile communication terminal in a GSM system according to the present invention; and
FIG. 8 flow chart showing a short message managing procedure by a SM-SC in a GSM system according to the invention.

In a preferred embodiment of the invention, it is assumed that the mobile communication terminal 10 transmits a short message to the mobile communication terminal 20. A short message correcting or deleting request signal for correcting or deleting a short message sent to a SM-SC is defined as a short message managing signal.

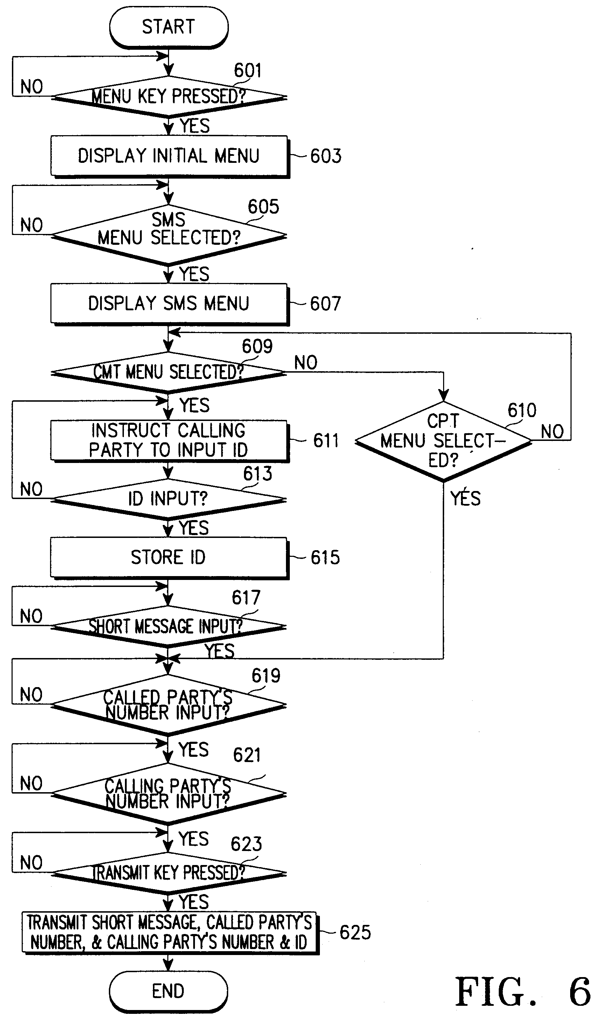

The short message registering procedure of FIG. 6 is the same as that of FIG. 3 except steps 611, 613 and 615. These steps are for transmitting a calling party's identification (ID) together with a short message. In more detail, if the CMT menu is selected at step 609, the controller 1 instructs the calling party to input its ID. The controller 1 then checks if the ID is input at step 613. If it is input, the ID is stored in the memory 2 at step 615. The stored ID is transmitted in a prescribed format through the antenna via the audio circuit 6 and the RF circuit 5 to the BSS 30, together with the short message, the calling party's number and the called party's number.

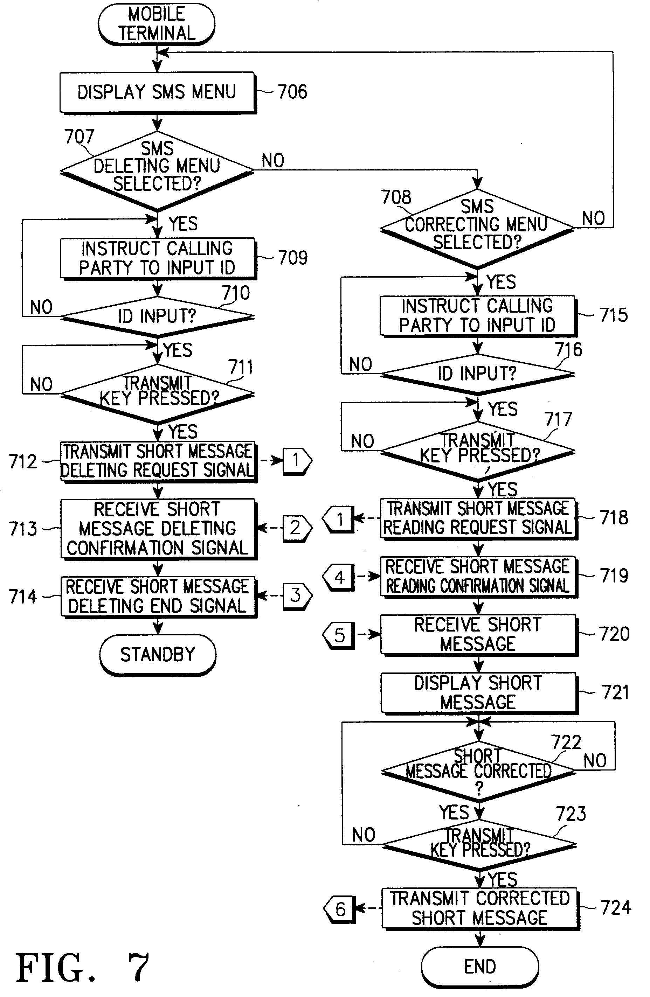

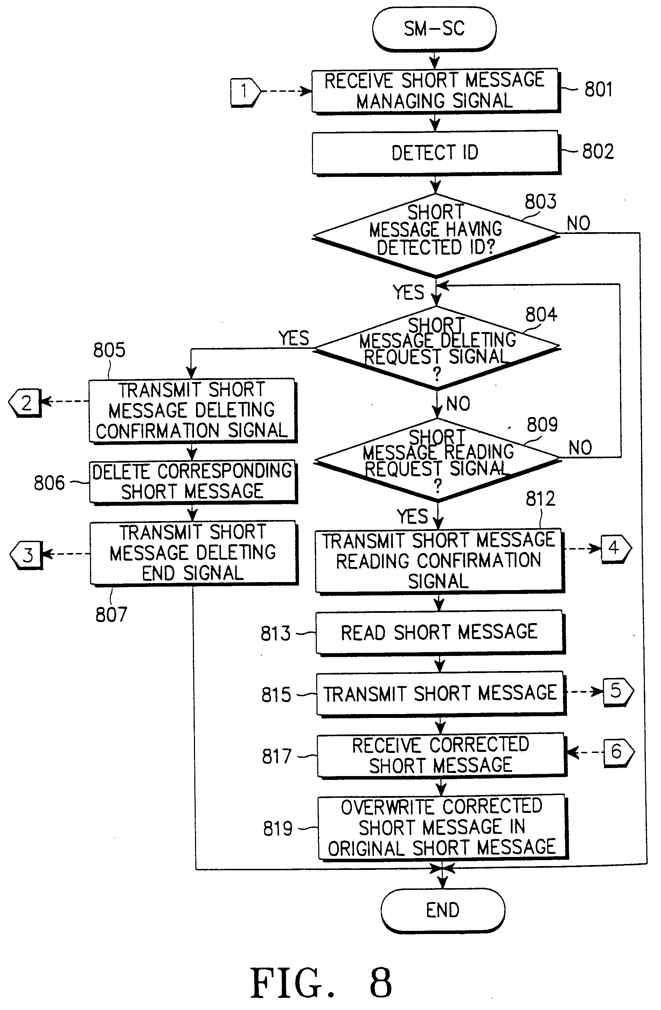

The SM-SC 60 receives the short message through the BSC 30 and the MSC 50 and stores the received short message in the memory 70. Upon wrongly transmitting the short message, the calling party can correct or delete the short message by short message managing procedures shown in FIGs. 7 and 8. FIG. 7 is a flow chart of a short message managing procedure by the mobile communication terminal in the GSM. FIG. 8 is a flow chart of a short message managing procedure by the SM-SC in the GSM. A preferred method for managing the short message stored in the SM-SC 60 will now be described with reference to figures 7 and 8.

The controller 1 of the mobile communication terminal 10 causes the display unit 4 to display the SMS menu in response to an input of a prescribed key at step 706. As items of the SMS menu, there are CMT, CPT, SMS deleting and SMS correcting menus. The controller 1 checks if the SMS deleting or correcting menu is selected at steps 707 and 708. If the SMS deleting menu is selected, the controller 1 proceeds to step 709 to instruct the calling party to input its ID. The controller 1 then checks if the ID is input at step 710. If yes, the controller 1 checks whether the transmit key is pressed at step 711. If the transmit key is pressed, the controller 1 transmits a short message deleting request signal which is a short message managing signal to the SM-SC 60 at step 712.

The SM-SC 60 receives the short message managing signal at step 801. The SM-SC 60 then detects the ID from the short message managing signal at step 802. At step 803, a check is made to see if there is a short message having the detected ID. If no short message has the detected ID, the short message managing procedure is ended. If there is a short message having the detected ID, the SM-SC 60 checks if the short message managing signal is a short message deleting request signal or a short message reading request signal.

Since the short message deleting request signal has been transmitted at step 712, the SM-SC 60 proceeds to step 805 to transmit a short message deleting confirmation signal to the mobile communication terminal 10. The SM-SC 60 then deletes a corresponding short message at step 806 and then transmits a short message deleting end signal to the mobile communication terminal 10.

The controller 1 of the mobile communication terminal 10 receives the short message deleting confirmation signal at step 713 and receives the short message deleting end signal at step 714. Upon receiving the short message deleting confirmation signal, the controller 1 causes the display unit 4 to display a deleting confirmation message indicating that the short message is to be deleted. Upon receiving the short message deleting end signal, the controller 1 causes the display unit 4 to display a message indicating that the short message has been deleted.

If the calling party selects the SMS correcting menu at step 708, the controller 1 instructs the calling party to input its ID at step 715. The controller 1 then checks if the ID is input at step 716. If so, the controller 1 checks if the transmit key is pressed at step 717. If the transmit key is selected, the controller 1 advances to step 718 to transmit a short message reading request signal to the SM-SC 60.

If the short message managing signal is determined as the short message reading request signal at step 809, the SM-SC 60 transmits a short message reading confirmation signal to the mobile communication terminal 10 at step 812, and reads a corresponding short message from the memory 70 at step 813. The read short message is transmitted to the mobile communication terminal 10 at step 815.

The controller 1 of the mobile communication terminal 10 receives the short message at step 720 and causes the display unit 4 to display the short message at step 721. The controller 1 checks if the short message is corrected at step 722. If it is corrected, a check is made to see if the transmit key is selected. If it is selected, the corrected short message is transmitted to the SM-SC 60 at step 724.

The SM-SC 60 receives the corrected short message at step 817 and causes the memory 70 to overwrite the corrected short message in its area in which an original short message is stored at step 819.

## Claims

1. Method for manipulating short messages in the GSM system having a memory (70) for storing said short messages and for storing identification information indicating the originator of each short message, the method comprising the steps of:
transmitting (712, 718) a manipulation request signal from a mobile communication terminal (10, 20) to a short message service center (60) indicating a stored short message; and
performing (806, 819) the requested operation on the stored short message.

2. The method according to claim 1, wherein the manipulation request signal is a signal to request a delete operation.

3. The method according to claim 1, wherein the manipulation request signal is a signal to request a correction operation.

4. The method according to claim 3, wherein the step of performing comprises the steps of:
inputting the corrected version of the short message;
transmitting (724) the corrected version from the mobile communication terminal to the short message service center; and
overwriting (819) the stored short message by the corrected version.

5. The method according to claim 4, wherein the step of inputting comprises the steps of:
transmitting (815) the stored short message from the short message service center to the mobile communication terminal; and
modifying (722) the transmitted short message.

6. The method according to one of claims 1 to 5, wherein the manipulation request signal includes identification information of the calling party, and the step of performing includes a step of comparing (803) the identification information of the calling party with the identification information stored in said memory.

7. The method according to one of claims 1 to 6, further comprising the step of transmitting (805, 812) a confirmation signal from the short message service center to the mobile communication terminal at the beginning of the operation.

8. The method according to one of claims 1 to 7, further comprising the step of transmitting (807) a confirmation signal from the short message service center to the mobile communication at the end of the operation.

9. The method according to one of claims 1 to 8, wherein the step of transmitting the manipulation request signal comprises the step of selecting (707, 708) from a service menu a menu item indicating the kind of manipulation.

10. The method according to one of claims 1 to 9, wherein the step of transmitting the manipulation request signal comprises the step of pressing (711, 717) a transmit key.

11. A mobile communication terminal (10, 20) for use in the GSM system, comprising:
means for generating and sending short messages; and
means for generating and sending a manipulation request signal.

12. The terminal according to claim 11, further comprising means for receiving short messages.

13. The terminal according to claim 11 or 12, wherein the manipulation request signal is a signal to request a delete operation.

14. The terminal according to claim 12, wherein the manipulation request signal is a signal to request a correction operation.

15. The terminal according to claim 14, further comprising means for correcting a received short message.

16. The terminal according to one of claims 11 to 15, wherein the manipulation request signal includes identification information of the calling party.

17. The terminal according to one of claims 11 to 16, further comprising means for receiving a confirmation signal.

18. The terminal according to one of claims 11 to 17, further comprising means for displaying a service menu having menu items indicating the kind of manipulation.

19. A short message service center (60) in the GSM system, comprising:
a memory (70) for storing short messages and identification information indicating the originator of each short message;
means for receiving short messages;
means for receiving a manipulation request signal; and
means for performing the requested operation on the stored short messages.

20. The short message service center according to claim 19, further comprising means for sending short messages.

21. The short message service center according to claim 19 or 20, wherein the manipulation request signal is a signal to request a delete operation.

22. The short message service center according to claim 19 or 20, wherein the manipulation request signal is a signal to request a correction operation.

23. The short message service center according to claim 22, further comprising means for overwriting a stored short message with a received short message.

24. The short message service center according to one of claims 19 or 23, further comprising means for sending a confirmation signal.
